# EUROPÄISCHE PATENTSCHRIFT

(11) **EP 1 060 649 B1**
(45) Veröffentlichungstag und Bekanntmachung des Hinweises auf die Patenterteilung: **17.08.2005**
(21) Anmeldenummer: 00111747.2
(22) Anmeldetag: 02.06.2000
(51) Int. Cl.: A01C 7/20, A01C 7/08, A01C 5/06, A01B 35/24, A01C 7/18

(54) **Schlepperbetriebene Sämaschine mit Säscharanordnung und Dreipunkt-Anhängung**
Tractor-driven sowing machine with seed drill coulter and three point linkage
Semoir entraîné par un tracteur avec soc semeur et attelage trois points

(30) Priorität: 15.06.1999 DE 29910414 U; 15.06.1999 DE 29910416 U
(43) Veröffentlichungstag der Anmeldung: 20.12.2000
(73) Patentinhaber: Horsch Maschinen GmbH, 92421 Schwandorf (DE)
(72) Erfinder: Horsch, Michael, 92421 Schwandorf (DE)
(74) Vertreter: Wasmeier, Alfons, Dipl.-Ing.

(56) Entgegenhaltungen:
- WO-A-99/27766
- DE-A- 1 457 666
- DE-C- 3 301 087
- US-A- 3 575 243
- US-A- 4 977 841

## Beschreibung

Die Erfindung betrifft eine Säscharanordnung für schlepperbetriebene Sämaschinen mit Dreipunkt-Anhängung.

Es sind Kombinationen aus Säscharen und Druckrollen bei Sämaschinen bekannt, bei denen die Säschare einstellbar unter Zugfeder- oder Druckfederwirkung stehen. Derartige bekannte Säscharanordnungen haben mechanische Drehpunkte bzw. Lagerstellen, die im Betrieb hohem Verschleiß ausgesetzt sind, mit dem Resultat, dass eine regelmäßige Wartung und/oder Auswechslung erforderlich ist. Auch ist beim Stand der Technik nachteilig, dass die Druckrollen stets hinter den Scharen angeordnet sind.

Des weiteren ist bekannt, die Scheiben von Säscharen in einer Gummifederung aufzuhängen. Hierzu werden Gummileisten an den Trägerarmen eingesetzt, die dem System die notwendige Beweglichkeit geben und die Scheiben und Schare im Betrieb vor Schäden schützen. Derartige Gummileisten sind zur Vorspannung bzw. Federung der Schare bestimmt.

Aus der US-A-4 977 841 ist bekannt, eine schlepperbetriebene Sämaschine mit Säscharanordnung und ohne mechanische Drehteile so auszugestalten, dass jedem Säschar ein Tiefenführungs- und Druckrad zugeordnet ist, und dass zur Lagerung und Druckeinstellung des Säschars Gummifederelemente vorgesehen sind.

Kombinationen aus Zugmaschine und Sämaschine ergeben bei zunehmender Schleppergröße das Problem, dass die Sämaschine in der Regel, insbesondere aufgrund abnehmender Sätankfüllung und demzufolge großen Gewichtsunterschiedes der Maschinen, einen im Vergleich zur Zugmaschine erheblich geringeren Bodendruck ausübt, so dass die Bestrebungen dahin gehen, zumindest einen Teil der sich ändernden Gewichtsbelastung vom Schlepper auf die Sämaschine zu übertragen und damit einen gewissen Gewichtsausgleich zu erreichen.

Aufgabe der Erfindung ist, eine Sämaschine mit Säscharanordnung vorzuschlagen, die keine mechanischen Drehteile oder Lagerstellen am Scharrahmen erforderlich macht, die eine Druckeinstellung der Schare ermöglicht, und die verhindert, dass die Schareinheit beim Anheben nach unten fällt. Weitere Aufgabe der Erfindung ist, bei schleppergetriebenen Sämaschinen mit Dreipunkt-Anhängung die im Betrieb auftretenden hohen Gewichtsunterschiede zwischen Sämaschine mit Sätank und Zugmaschine von der Zugmaschine auf die Sämaschine zu übertragen.

Gemäß der Erfindung wird diese Aufgabe dadurch gelöst, dass eine schlepperbetriebene Sämaschine eine Säscharanordnung ohne mechanische Drehpunkte bzw. Lagerstellen eine Tiefenführungs- und Druckradanordnung pro radförmigem Säschar, Gummifederelemente zur Lagerung und Druckeinstellung des Säschars sowie ein Anschlagrohr aufweist, das mit dem Schartragrohr als Einheit so zusammenwirkt, dass beim Ausheben der Säscharanordnung eine Bewegung nach unten verhindert wird, und dass zur Gewichtungsverlagerung von der Zugmaschine über die Dreipunkt-Aufhängung an die Sämaschine im Oberlenkersatz eine Schiebervorrichtung mit Aussparung und Führungsbolzen vorgesehen ist, die eine Verstellspindel aufweist, und dass zwischen Schiebervorrichtung bzw. Verstellspindel und Maschinenrahmen eine Federanordnung in Form einer mechanischen, hydraulischen oder pneumatischen Feder, oder wahlweise eine hydraulische Druckvorrichtung angeordnet ist. Mit der erfindungsgemäßen Säscharanordnung werden die Tiefenführungs- und Druckräder wahlweise vor, neben oder hinter der Säscharanordnung angeordnet, und die in Richtung der Scharachse nebeneinander angeordneten Säscharanordnungen sind vorzugsweise mit unterschiedlichen Armlängen und darauf abgestimmten unterschiedlichen Gummifederbreiten ausgebildet, damit sichergestellt ist, dass gleicher Druck an den einzelnen Scharanordnungen erzielt wird.

Die Gummifederelemente sind vorteilhafterweise austauschbar ausgebildet, so dass damit unterschiedliche Schardruckbereiche einstellbar sind. Des weiteren wird vorgeschlagen, die Gummifederelemente mit unterschiedlichen Shorehärten auszustatten, um eine Anpassung an betriebliche Gegebenheiten zu erzielen. Vorzugsweise bestehen die Gummifederelemente aus mehreren Gummischnüren, die auf ein Vierkantrohr diagonal gegenüberliegend aufgesetzt sind.

Das Schartragrohr ist relativ zum Scharrahmenträgerarm verdrehbar angeordnet. Damit ist der Schardruck einstellbar. Durch höhenverstellbare Anordnung des Schartragrohres ist die Schartiefe einstellbar. Des weiteren ist die Radtiefe dadurch einstellbar, dass der das Tiefenführungs- und Druckrad aufnehmende Tragarm mit dem Schararm über ein arretierbares Gelenk verbunden ist, das ein Federelement aufweisen kann, damit eine Abfederung des Druck- und Tiefenführungsrades erreicht wird.

Die erfindungsgemäße Säscharanordnung umfaßt eine Kombination aus Schar, Schararm, Gummi- oder Kunststoff-Federelement und Anschlag. Die Anordnung ist so ausgelegt, dass sie ohne bewegliche mechanische Drehteile, wie z.B. mechanische Drehpunkte, ausgestattet ist, damit der Verschleiß so gering wie möglich gehalten werden kann. Hierzu sind die einzelnen Scharscheiben am Schartragrohr höhenverstellbar befestigt und über Gummifederelemente elastisch nachgiebig gelagert. Diese Gummifederelemente sind z.B. als Gummistäbe ausgebildet, die in Form von diagonal versetzten Gummischnüren am Vierkant-Rohr des Schartragrohres angeordnet, z.B. angepreßt sind, und die eine begrenzte Beweglichkeit der Scharanordnung gegenüber dem Tragrohr ergeben und damit gegen Beschädigungen schützen. Der Schararm bzw. das Schartragrohr weist einen Ansatz, eine Verlängerung oder dergl. auf, die mit dem rahmenfesten Anschlagrohr in Eingriff kommt, wenn die Scharanordnung ausgehoben wird, z.B. das gesamte System über das Dreipunkt-Anlenksystem des Schleppers angehoben wird.

Mit einer derartigen Ausbildung wird eine Tiefeneinstellung der Säschare erreicht, indem Anschlagrohr und Schararm als Einheit nach oben und unten verstellt werden. Eine weitere Tiefenverstellung wird durch Einstellen der Arbeitshöhe der Druckrolle gegenüber der Scharanordnung erreicht.

Die parallel zueinander angeordneten Schararme, die die Schare aufnehmen, haben nach einer speziellen Ausführung der Erfindung abwechselnd versetzt zueinander unterschiedliche Länge, und die die Schararme aufnehmenden Schartragrohre weisen, um gleiche Druckbedingungen an den Scharen zu erzielen, Gummifederelemente unterschiedlicher Breite bzw. Größe bzw. unterschiedlicher Härte auf, so dass den längeren Schararmen breitere oder härtere Gummifederelemente und den kürzeren Schararmen schmalere oder weniger harte Gummifederelemente zugeordnet sind.

Nachstehend wird die Erfindung in Verbindung mit der Zeichnung anhand eines Ausführungsbeispieles erläutert. Es zeigt:

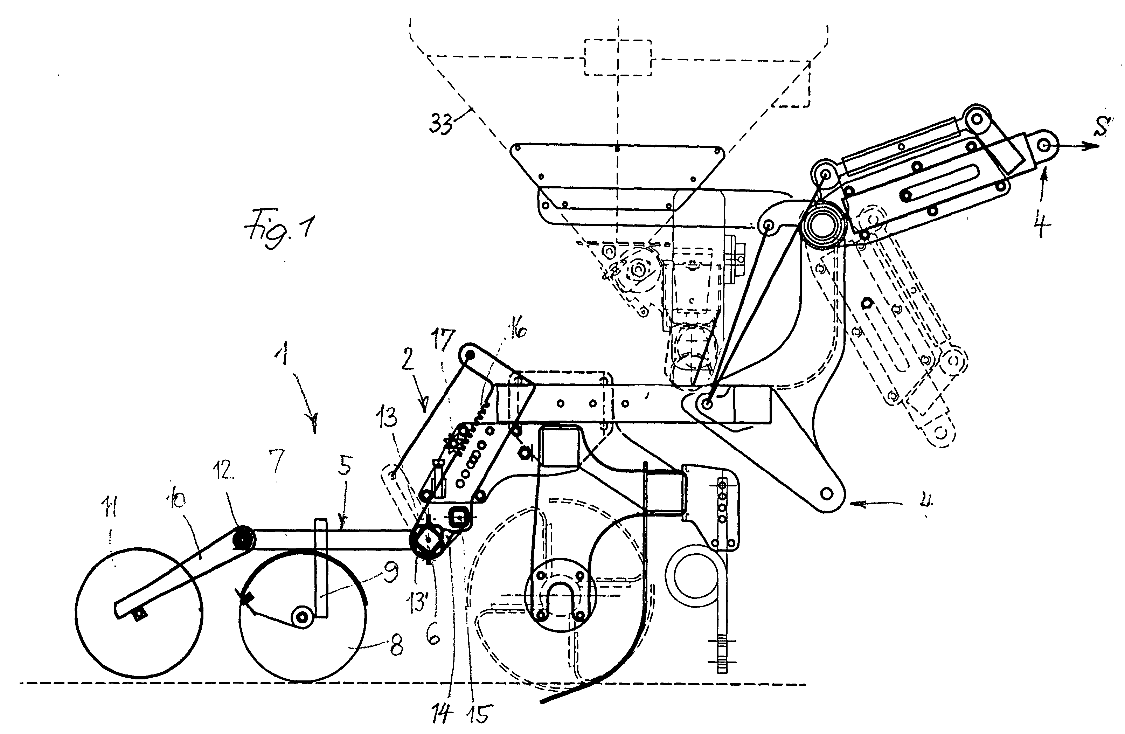

- Fig. 1: eine Gesamtansicht der Sämaschine mit Dreipunkt-Anhängung,

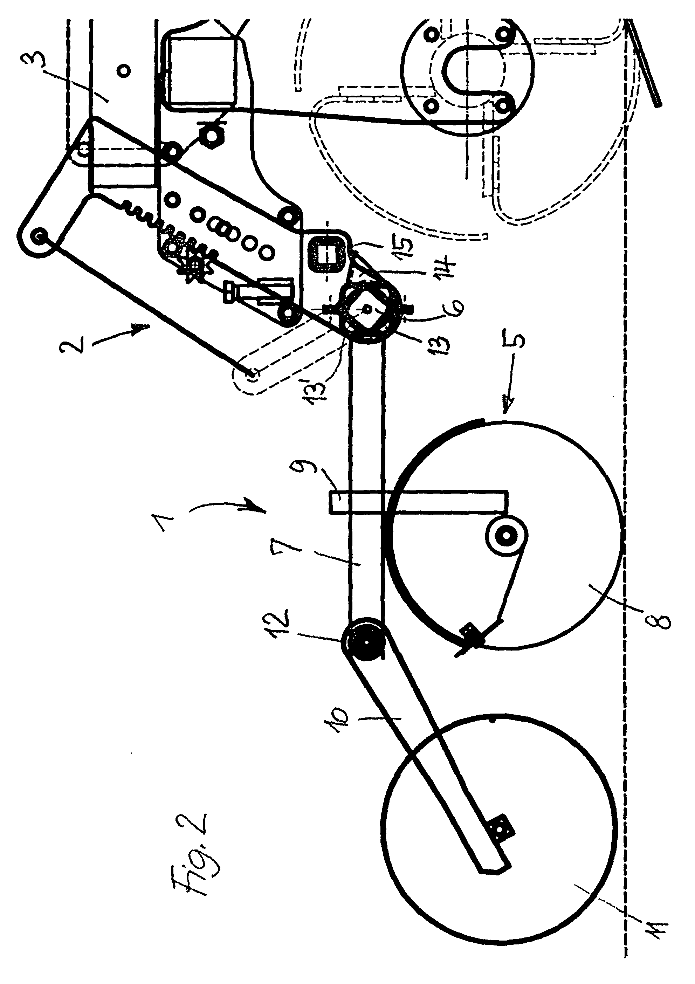

- Fig. 2: die Säscharanordnung nach der Erfindung,
- Fig. 3: in vergrößerter Darstellung die Gummifederelemente im Schartragrohr mit Anschlag,
- Fig. 4: eine schematische Darstellung paralleler Schararme unterschiedlicher Schararmlänge und unterschiedlich breiter Gummifederelemente, und
- Fig. 5: eine Ausführungsform der Gewichtsverlagerung von der Zugmaschine auf die Sämaschine über die Dreipunkt-Anhängung.

Die Sävorrichtung 1 weist eine Vorrichtung 2 zum Verstellen des Schardruckes in Form einer am Maschinenrahmen 3 befestigten Verstellvorrichtung auf. Der Maschinen-rahmen 3 ist mit einer Dreipunkt-Anhängung 4 gekoppelt. die von einem (nicht dargestellten) Schlepper aufgenommen und verfahren wird. Die Sävorrichtung 1 besteht aus der Säscharanordnung 5, die an einem Schartragrohr 6 mit Schararmen 7 befestigt ist, und die radförmige Säschare 8 mit Saatgutzuführung 9 aufweist, ferner an Tragarmen 10 befestigte Tiefenführungs- und Druckräder 11, die über arretierbare Gelenke 12 mit den Schararmen 7 verbunden sind. Die Schararme 7 sind am Schartragrohr 6 als durchgehende Achse befestigt und zwischen Schartragrohr 6 und Außenkörper sind Gummifederelemente 13, 13' in Form von Gummileisten angeordnet, die die Schare elastisch nachgiebig am Maschinenrahmen festlegen. Anstatt aus Gummi können die Federelemente auch aus geeignetem Kunststoff bestehen.

Von dem Schartragrohr 6 bzw. dem Außenkörper ausgehend und sich nach hinten erstreckend ist ein Anschlagelement 14 angeordnet, das mit einem Anschlagrohr 15 in Eingriff kommt, wenn die Sävorrichtung angehoben wird, damit sie nicht nach unten kippen kann. Mit 16, 17 ist an der Verstellvorrichtung 2 eine Ritzel-Zahnstangen-Vorrichtung zur Höhenbewegung der Sävorrichtung bzw. des Schararmes 7 vorgesehen.

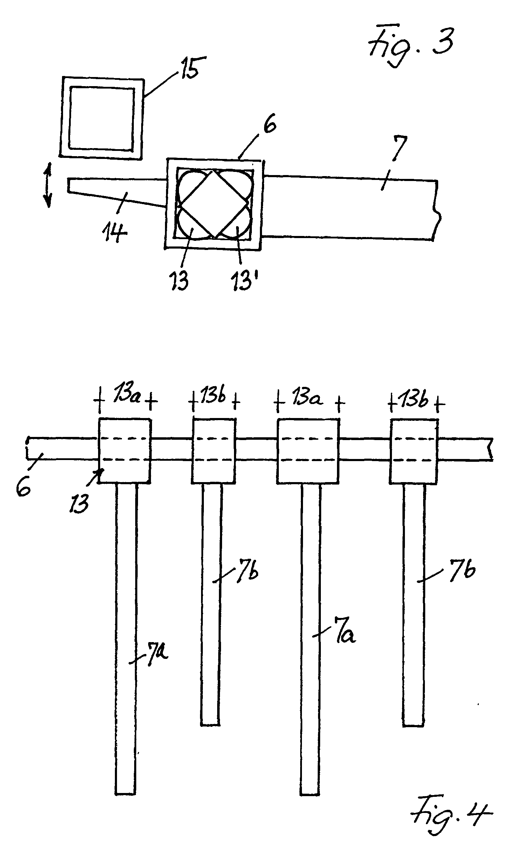

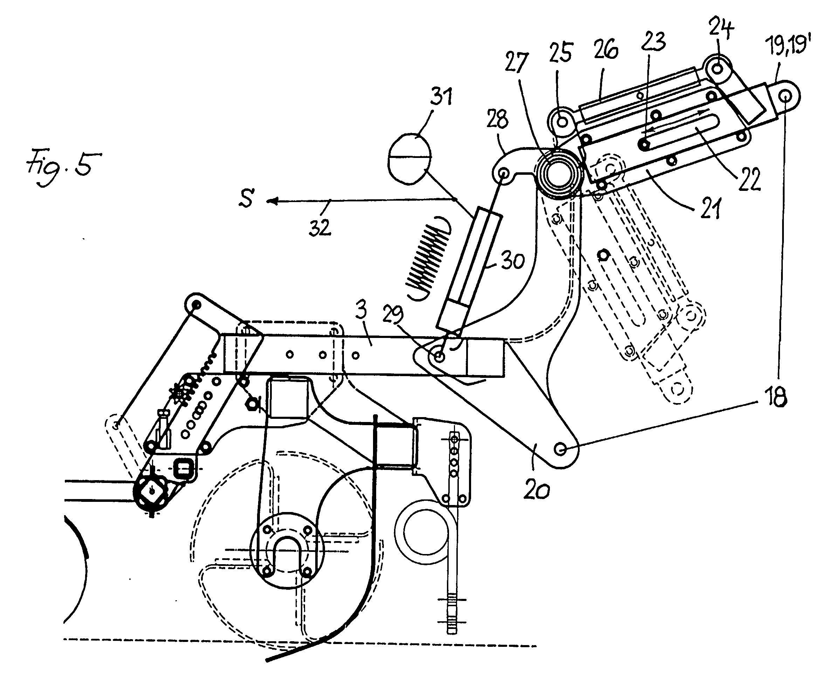

Fig. 3 zeigt schematisch den Schararm 7 mit dem Schartragrohr 6 und den Gummifederelementen 13, 13' sowie dem Anschlag 14, der mit dem Maschinenrahmen 4 in Eingriff kommt, wenn die Maschine angehoben wird. Aus der Darstellung nach Fig. 4 ergibt sich die Ausbildung der parallelen Schararme 7 unterschiedlicher Länge, wobei die Schararme 7a eine größere Länge als die Schararme 7b haben, und unterschiedlicher Breite der Gummifederelemente 13, wobei die Federelemente 13a eine größere Breite als die Federelemente 13b haben.

Fig. 5 zeigt die Dreipunkt-Anhängung 18 mit Oberlenkersatz 19, 19' und Unterlenker 20. Im Oberlenker 19, 19' ist eine Schiebervorrichtung 21 mit einer Aussparung 22 und einem Führungsbolzen 23 angeordnet. Mit der Schiebervorrichtung 21 sind Tragarme 24 und 25 befestigt, die an ihren freien Enden eine Verstellspindel 26 aufnehmen. Ein Ende der Schiebervorrichtung 21 ist mit einer Drehachse 27 verbunden, von der ein Flansch 28 ausgeht, der ein Ende einer Federanordnung 30, beispielsweise einer mechanischen, einer hydraulischen oder einer pneumatischen Feder, aufnimmt, deren anderes Ende an einer Anlenkstelle 29 am Maschinenrahmen 3 festgelegt ist. Anstelle der Federanordnung 30 kann eine Druckblase 31 vorgesehen sein, die über einen Hydraulikanschluss 32 mit dem Schleppers verbunden ist. 33 bezeichnet den Sätank.

## Patentansprüche

1. Schlepperbetriebene Sämaschine mit einem Sätank, mit einer Säscharanordnung ohne Drehteile, mit einer Dreipunkt-Aufhängung, und mit einem Tiefenführungs- und Druckrad (11) pro Säschar, **gekennzeichnet durch** die Kombination folgender Merkmale:
Gummifederelemente (13, 13') zur Lagerung und Druckeinstellung des Säschars (8),
eine Anschlagvorrichtung (14), die mit dem Schartragrohr (6) als Einheit so zusammenwirkt, dass beim Ausheben der Säscharanordnung eine Bewegung nach unten verhindert wird, und
eine Schiebervorrichtung (21) mit Aussparung (22) und Führungsbolzen (23) im Oberlenkersatz (19, 19'), die eine Verstellspindel (26) aufweist, und eine Federanordnung (30) zwischen Schiebervorrichtung (21) bzw. Verstellspindel (26).

2. Sämaschine nach Anspruch 1, **dadurch gekennzeichnet, dass** die Federanordnung (30) als mechanische, hydraulische, pneumatische Feder oder wahlweise als hydraulische Druckvorrichtung (31) ausgebildet ist.

3. Sämaschine nach Anspruch 1 oder 2, **dadurch gekennzeichnet, dass** die in Richtung der Scharachse nebeneinander befindlichen Säscharanordnungen (1) unterschiedliche Armlängen und darauf abgestimmte unterschiedliche Gummifederbreiten aufweisen.

4. Sämaschine nach einem der Ansprüche 1 - 3, **dadurch gekennzeichnet, dass** die Gummifederelemente (13, 13') jeweils aus mehreren Gummischnüren bestehen, die auf ein Vierkantrohr diagonal gegenüberliegend aufgesetzt sind.

5. Sämaschine nach einem der Ansprüche 1 - 4, **dadurch gekennzeichnet, dass** das Schartragrohr (6) relativ zum Scharrahmenträgerarm verdrehbar ausgebildet ist und **dadurch** der Schardruck einstellbar ist.

6. Sämaschine nach einem der Ansprüche 1 - 5, **dadurch gekennzeichnet, dass** das Schartragrohr (6) höhenverstellbar angeordnet und damit die Schartiefe einstellbar ist.

7. Sämaschine nach einem der Ansprüche 1 - 6, **dadurch gekennzeichnet dass** der das Tiefenführungs- und Druckrad (11) aufnehmende Tragarm mit den Schararmen (7) über ein arretierbares Gelenk (12) verbunden und damit die Radtiefe einstellbar ist.

8. Sämaschine nach Anspruch 7, **dadurch gekennzeichnet, dass** das arretierbare Gelenk (12) ein Federelement aufweist, das eine Abfederung des Tiefenführungs- und Druckrades (11) ergibt.

## Claims

1. Tractor-operated drill having a seed tank, a drilling share arrangement without rotary parts, a three-point suspension and one depth guidance and pressure wheel (11) per drilling share, **characterized by** the combination of the following features:
rubber spring elements (13, 13') for the mounting and pressure setting of the drilling share (8),
a stop mechanism (14) cooperating as a unit with the share support tube (6) in such a way that on raising the drilling share arrangement a downward movement is prevented and
a slide mechanism (21) with a recess (22) and guide bolts (23) in the upper linkage set (19, 19') having an adjusting spindle (26), and a spring arrangement (30) between the slide mechanism (21), respectively the adjusting spindle (26).

2. Drill according to claim 1, **characterized in that** the spring arrangement (30) is constructed as a mechanical, hydraulic or pneumatic spring or, as desired, as a hydraulic pressure mechanism (31).

3. Drill according to claim 1 or 2, **characterized in that** the drilling share arrangements (1) juxtaposed in the share axis direction have different arm lengths and differing rubber spring widths matched thereto.

4. Drill according to one of the claims 1 to 3, **characterized in that** in each case the rubber spring elements (13, 13') comprise several rubber cords, which are placed in diagonally facing manner on a square tube.

5. Drill according to one of the claims 1 to 4, **characterized in that** share support tube (6) is rotatable relative to the share frame support arm and consequently the share pressure can be adjusted.

6. Drill according to one of the claims 1 to 5, **characterized in that** the share support tube (6) is vertically adjustable, so that the share depth can be set.

7. Drill according to one of the claims 1 to 6, **characterized in that** the support arm receiving the depth guidance and pressure wheel (11) is connected to the share arms (7) by means of a lockable joint (12) and consequently the wheel depth can be set.

8. Drill according to claim 7, **characterized in that** the lockable joint (12) has a spring element leading to a cushioning of the depth guidance and pressure wheel (11).

## Revendications

1. Semoir entraîné par un tracteur avec un réservoir à semences, avec un dispositif de socs semeurs sans parties rotatives, avec une suspension à trois points et avec une roue de guidage en profondeur et de pression (11) par soc semeur, **caractérisé par** la combinaison des caractéristiques suivantes :
- des éléments de ressort en caoutchouc (13, 13') pour le placement et l'ajustement de pression du soc semeur (8),
- un dispositif de butée (14) qui coopère en tant qu'unité avec le tube porteur de soc (6) de manière à empêcher un mouvement vers le bas lors du soulèvement du dispositif de soc semeur, et
- un dispositif coulissant (21) avec un évidement (22) et des broches de guidage (23) dans le jeu de bras supérieurs (19, 19') qui présente une broche de réglage (26), et un dispositif de ressort (30) entre le dispositif coulissant (21) ou encore la broche de réglage (26).

2. Semoir selon la revendication 1, **caractérisé en ce que** le dispositif de ressort (30) est configuré comme ressort mécanique, hydraulique, pneumatique ou au choix comme dispositif de pression (31) hydraulique.

3. Semoir selon la revendication 1 ou 2, **caractérisé en ce que** les dispositifs (1) de soc semeur se trouvant les uns à côté des autres dans le sens de l'axe des socs présentent différentes longueurs de bras et différentes largeurs de ressort en caoutchouc

4. Semoir selon une des revendications 1 - 3, **caractérisé en ce que** les éléments de ressort en caoutchouc (13, 13') sont respectivement constitués de plusieurs cordons en caoutchouc qui sont placés de manière diagonalement opposée sur un tube carré.

5. Semoir selon une des revendications 1 - 4, **caractérisé en ce que** le tube porteur de soc (6) est configuré de manière rotative par rapport au bras porteur de cadre de soc et que la pression du soc peut de ce fait être ajustée.

6. Semoir selon une des revendications 1 - 5, **caractérisé en ce que** le tube porteur de soc (6) est disposé de manière réglage en hauteur et que la profondeur de soc peut ainsi être ajustée.

7. Semoir selon une des revendications 1 - 6, **caractérisé en ce que** le bras porteur accueillant la roue de guidage en profondeur et de pression (11) est relié avec les bras (7) de soc par l'intermédiaire d'une articulation (12) blocable et que la profondeur de roue peut ainsi être ajustée.

8. Semoir selon la revendication 7, **caractérisé en ce que** l'articulation (12) blocable présente un élément de ressort qui fournit une suspension sur ressort de la roue de guidage en profondeur et de pression (11).
